# EUROPEAN PATENT APPLICATION

(11) **EP 0 973 126 A1**
(43) Date of publication of application: **19.01.2000**
(21) Application number: 98950120.0
(22) Date of filing: 27.10.1998
(51) Int. Cl.: G06K 19/07, G07F 7/10

(54) **SYSTEM FOR THE MULTIPLE COMMUNICATION OF DATA FROM INFORMATION CARRYING CARDS PROVIDED WITH A MICROPROCESSOR AND MEMORY OR THE LIKE**

(30) Priority: 27.10.1997 ES 9702217; 23.10.1998 ES 9802236
(71) Applicant: LOUREIRO BENIMELI, Fermin, Jaime, 08034 Barcelona (ES)
(72) Inventor: LOUREIRO BENIMELI, Fermin, Jaime, 08034 Barcelona (ES)
(74) Representative: Urizar Anasagasti, José Antonio
(86) International application number: ES9800292
(87) International publication number: WO9922341

(57) **Abstract**

The invention relates to a multiple intercommunication of data from information carrying cards provided with a microprocessor and a memory or the like and comprising a user's interface (1) which has housing means (17) to receive one or a plurality of data and information carrying plates (2), a microprocessor (3) intended to the control and recording of operations carried out from said user's interface, information storage means (4,5), and alphanumerical key pad (6), a displace screen (7) and a emitter-receiver (8) capable of establishing communications with external devices which manage and control said operations; an external device (9) for managing the operations controlled from said user's interface (1), and which is provided with an emitter-receiver (10) intended to establish communications with the user's interface (1), and an actuation module (11) capable of controlling the electromechanical and/or electronic devices (12) to execute the operations controlled from said user's interface (1); contact means (22; 31) and electric connection means (18) for connection to the main bus (19) and capable of communicating said contact means (22; 31) with the other elements of said user's interface (1); an external data and information medium (34) intended to be housed or placed into a physical element such as a vehicle, valuable object, luggage or the like for its control, location and identification, or to be set in the label or seal of a commercial product for its verification and authentication.

## Description

The object of present invention refers, as indicated in the title, to data multi intercommunication system of information storage cards such as credit cards or similar, of the type used in banking operations, purchases, identification and other services, as well as in other home type services, system that means important advantages over other means used at present with this purpose.

Recently, the electronic chip card has been developed, this card incorporates to all elements of traditional card, a microprocessor and a memory within same card, these additional items increase the difficulty to get a duplicate and provide the possibility of being self sufficient for checkings, validations, and information coding and recording. The mentioned electronic chip consists of an information and data storage plate, of reduced size, approximately 0,5 x 0,5 cms., thus the card is the physical support for the chip, with the purpose to be handy for the user, that card only incorporating some kind of serigraphy, hologram or similar, or any other type of graphic control like, for example, the user's signature or similar.

However, at present, if it is true that own features of cards, such as size, contacts of electronic chip built in cards, etc. have become standard, each service requires the use of a card with specific design, what implies that the user must carry a great number of cards if be wishes to take advantage of services packs offered now which cover from trade and/or economic transactions to payment of telephone bills and public transport fares, etc. This problem becomes more serious as long as each bank offers its own card for the use of its own services, with use with other banks being not possible or too costly.

With the aim to integrate all information storage cards such as credit cards or similar cards into a single system or means, it has been developed the multi inter communication system of data from information storage cards such as credit cards and similar cards, which is the object of present invention, making easier the use of services offered by said cards.

Present invention refers to a multi intercommunication system of data provided by information storage cards such as credit cards or similar cards, consisting of:
- an user's interface which is basically a remote control provided with means for housing one or several information bearing plates and data from said cards, a printed circuit adequate to establish contacts with said plates, a microprocessor designed to control, command and record operations carried out from that user's interface, information storage means such as, preferably, a first reading and writing memory, for data recording and reading, and a second reading memory, preferably an EPROM memory, and alphanumeric keyboard which allows access to information and handling of said plates, a visual screen adequate for the display of information related to operations made, and an emission-reception device, preferably with infrared rays, adequate to establish communication with exterior devices handling said operations.
- an external device for handling operations commanded from said user's interface, which includes a emission-reception device adequate to establish communication with user's interface, and a driving module designed to command the electro-mechanical and/or electronic devices used to implement operations controlled from said user's interface.
- connection means (22, 31) such as a printed circuit arranged to make connection with said plates, as well as electrical connection means (18) with main busbar (19), arranged to establish communication between said connection means (22, 31) and the remaining elements of said user's inteface (1), having the possibility of incorporating said coupling means in the user's interface (1) or being configurated by mean of an external reading device (24) arranged to communicate with said user's interface (1) through a communications gate (23) designed for such use;
- an information and data external support (34) provided with a microchip (35), and being configured so as to be placed or housed within a physical element such as a vehicle, valuable object, bagagge or similar for the control, location and identification of said elements, or it could be mounted on a commercial product tag or label in order to wave it checked and authentized.

Specifically, user's interface is provided with a case made of resistant and, preferably, light material, like plastic or similar, of an adequate size to be carried in a pocket, wallet or similar, and opening means to house one or several plates which contain information and cards data, such as credit cards or similar cards, and provided preferably with a folding back cover, with fastening means such that in the closed position the said plates can be securely fastened, preferably by finger pressure. With this system, placing, distribution and substitution of said plates can be easily done by the user, thus allowing user's access to the set of information and data storage plates by simply operating said opening means.

The mentioned housing means for information and data storage plates mainly consist of a set of compartments with an electrical device for an adequate connection to said printed circuit with the purpose of reading the information contained in said plates. Connection, reading of information and communication with the set of information and data bearing plates is made from a microprocessor located in user's interface through said printed circuit. The mentioned microprocessor also carries out the operationes of control, commands and registration of the operationes carried out from said user's interface.

The mentioned microprocessor located in user's interface can, optionally, automatically recognise each one of the information and data storage plates located in their respective housing, and can also identity every plate position through an exploratory check. This feature frees user from taking care about specific place for each one of the information and data bearing plates, for the user's own interface, through its microprocessor, will check and identity each one of the plates arranged in user's interface.

Microprocessor operations are completed with a first reading and writig memory, which is adequate for data recording and reading, and a second reading memory, preferably an EPROM memory, arranged in user's interface. The said reading memory stores all communication procedures which correspond to each one of the information and data storage plates housed in the corresponding connection means of user's interface.

Also, said memory can store several communication procedures with other plates not arranged in user's interface either because there are no plates available or because he does not require the use of those services, etc., but anticipated for use in the future, as well as for standard non custom manufacture.

Therefore, said microprocessor and the memories contained in said user's interface are intended to carry out the treatment, classification, identification and storage of information related to operations made in accordance with criteria established in the microprocessor program. Furthermore, said user's interface is provided with means for the configuration and reconfiguration of user's own interface, and also for the adptation, substitution or elimination of information and data from said storing plates.

The set of user's interface electronic devices of multi intercommunication system for information storage cards is fed by means of a set of rechargeable batteries. Also, an internal safety feeding system can be provided to avoid any data loss, user's interface deconfiguration, etc. as a result of main battery discharge.

Optionally, user's interface can gather its electronic devices in only one configurable printed circuit adequate to also incorporate the access to said information and data storin plates.

User's interface is also provided with means to communicate with user, mainly consisting of an input element, preferably an alphanumeric keyboard located on user's interface fron face, and adequate to permit access to information and process of said plates, and of an output element, preferably a screen, adequate for showing information related to operations carried out. Through this process, user controls operations to be made by means of multi intercommunication m ade or to be made, the required information or, in general, the information related to operations processed through system of information and data storing cards, such as credit cards or similar cards, which is the object of present invention, by using the alphanumeric keyboard, that lets him select a given service by selecting the corresponding plate, get access control to said service by fingering the corresponding personal key or code number, and other check or control operations like information from last operations, balances of credit accounts, electronic purse or similar, as well as access to different data bases (telephone list, electronic agenda, etc.). Also, user can watch on the screen, that can be, for example, a multi line liquid crystal screen, the information related to balance and results of operations already gh the alphanumeric keyboard.

In this way, said user's interface permanent storage means are provided with directional store space to hold a personal data base, adequate to store data related to own system, to user or other type of data that user wishes to incorporate into said data base.

Also, said user's interface comprises protection means which mainly consist of permanent storage means, such as, preferably, an EPROM memory, for recording and storing personal access keys adequate to restrict user's interface operations at different levels such as, preferably, global access, restricted access or access restricted to user. Therefore, a set of safety measures are established to permit user to carry out the corresponding actions in order to restrict use of said interface at different levels, thus avoiding its possible use by another person in case of loss or theft.

Within this set of safety measures and access restrictions, optionally user's interface can be provided with a personal exclusive identification number, so that interface has means for the storage of the mentioned personal and exclusive identification number or key.

Safety and access control measures are efficiently complemented with a set of error conditions detection means, alarms or similar devices, adequate to detect irregular situations due to wrong, inadequate or non permitted use, as well as blocking means for one, several or all operations controlled from user's interface as a result of activation of error, alarma or similar condition detection means.

Also, the multi intercommunication data system of information storage cards, such as credit cards and similar, is provided with an external means for controlling operations ordered from said user's interface, with the purpose of, in one hand to communicate bidirectionnally with said user's interface and, in the other hand, to activate electromechanical and/or electronic elements of the own device that provides the corresponding service, like a cash dispenser, a telephone payment system, a public ticketing machine or similar devices that, at present, are provided with a proper card control system. In this way, such an external device intended for control of operations ordered from said user's interface, works as an interface between the own device that offers a service to user, and user's interface, where orders are generated for the process of corresponding operations.

With the purpose of letting establish a bidirectional communication between user's interface and said external device used for the control of operations ordered from said user's interface, both elements of the multi intercommunication data system for information storage cards such as credit cards or similar, which is the object of present invention, are provided with an transmitter-receiver device which is adequate for the exchange of information between both devices like, for instance, sending and receiving data and control orders, checking and monitoring, etc.

The transmitter-receiver device located on user's interface and in the said external device used for the control of operations ordered from said user's interface, can be a transmitter-receiver device of infrared, radio frequency signal or ultrasounds, etc., type.

Based on the communication between user's interface and the external device used for the control of operations ordered from said user's interface, which, as a result of orders received from said user's interface, activates the electromechanical and/or electronic elements of own device that provides the corresponding service, like a cash dispenser, a telephone payment system, a public ticketing machine, or similar means, it is possible to infer the compatibility between systems presently used and system object of present invention, since both can be integrated in the same device that provides a service, the actual card controller and the external device object of present invention.

Thus, the data multi intercommunication system for information storage cards such as credit cards or similar, is prepared to obtain general information, bank information or similar, related to states of accounts, balances and any other operations, as well as other information available in data bases stored in operation centres, and also for payment and deposits reception in connection with any of systems capable of procesing said operations.

Finally, the data multi intercommunication system for information storage cards such as credit cards or similar, as the object of present invention, is provided with a set of elements that are adequate to communicate with other external devices. In this way, the transmitter-receiver device located on the user's interface lets the interface communicate with an prepared asembly of devices or information stations, which are equipped for intercommunication with user's interface.

Furthermore, the data multi intercommunication system for information storage cards such as credit cards or similar, as the object of present invention, is prepared for remote communication with external devices. In this way, user's interface can, as an option, be provided, with a modem connection interface, designed to be able to establish a remote connection and communication between said user's interface and a computer, allowing for bidirectional data exchange between both devices, thus letting user control and supervise the whole of operations made or incorporating them into a data base, the control from computer of user's interface as well as configuration and check operations ad similar of own user's interface, by using adequate tools provided in the computer. In this way, user's interface lets him transfer data from interface into a computer, from which, with data bases analysis and control tools available in the market, he can, quickly and easily, analyze the whole of operations carried out.

Means for connection to a modem and to a computer, as described hereinbefore, also allow for the use of data multi intercommunication system for information storage cards such as credit cards or similar, as the object of present invention, the carrying out of purchase operations, data base access, etc., through a computer and local and global data process networks, such as Internet. The access to this type of local or global networks lets user access to their available information as well as to services offered by them, using own user's interface as way of payment.

Optionally, user's interface of data multi intercommunication system for information storage cards such as credit cards or similar, as the object of present invention, can be provided with an interface for connection to an external reader, adequate to allow for bidirectional communication between them, as well as for the access from mentioned reader into information contained in said information and data storing plates, like in user's interface own internal storage means. Operations such as checking, verification and/or configuration of user's interface can be carried out from said external reader. This connection interface may physically be the same connection interface to modem as described hereinbefore, but on each case the associated controller shall be used.

Furthermore, the data intercommunication system of the invention can be provided with a device for the identification, control, localization and authentification of physical elements such as vehicles, valuable objects, baggages and similar. This device is constituted by an information and data external reader included withing the user's interface and with one or more external plates containing chips with predetermined information. The transmission of the information contained in said microchip to the information reader included in the user's interface of the present invention could be made by physical contact between both elements or without any physical contact. In this respect, the reading device is provided with means for connection to the plate containing information and data, means for activation/release of reading device, control means, command and synchronization of the communications with user's interface through the corresponding communications protocol, as well as means for communication with said user's interface.

The communication between user's interface and reading device can be established by any conventional transmission means, such as cable transmission, wireless transmission or optical transmission. Correspondingly, the communications por of user's interface will be provided with adequate reception/transmission means.

Optionally, the reading device can aditionally be provided with own temporary storage means as well as with data validation means.

Advantageously, said external information support includes a chip of the type used in the intelligent cards. With respect to the physical support size, this will consist of a different element from the conventional card, such as a rigid fabric label or any other material that can be used as a label or identification, control, authentification or positioning element.

The microchip consists of a silicon micropocessor with asynchronous communication, thus preventin a duplication of said element. The operation system or chip face acts as a support for a system that can establish a completely safe communication with the associated reading device, thus preventing any fraud in the label (chip) and also in the reading device.

The reading device will be a device especifically developed for said application, first to prevent its use by any unauthorized person. Second, it has to be a device especifically secured for said chips in their electronic protocol. The reading device will be designed so that it can carry out the operation with either a physical contact, or without physical contact, with the information external support which is mounted in a physical item like a label, seal or similar item.

Thus, we are offerin to the consumer and manufacturer the following applications:
a) means for cheking the authenticity of products, thus making it more difficult the manufacturing of replica or imitations of products identified by a trade mark as a quality sign, as far as the technology now developed with respect to the electronic chip incorporated into the credit cards allows for the use of a microprocessor and memory within the corresponding electronic chip, and also offers the possibility of carrying out by itself checks, validations, information coding and information storage. In this way, in addition to offering the means for checking the authenticity described hereinbefore, it is possible to include additional information with respect to the product, for example size, composition, price, place of origin etc., the user having the possibility to check easily on the display of the user's interface;
b) means for identification and localization of physical elements such as vehicles, valuable objects, baggage and similar;
c) means for checking the authenticity of bank notes, checks and any other bank document.

In order to better understand the object of present invention a practical and preferential performance of the data multi intercommunication system for information storing cards such as credit cards and similar is described, referred to enclosed drawings, where the following is shown:
Figure 1 shows a schematic block diagram of data multi intercommunication system for information storing cards, as the object of present invention.
Figures 2a and 2b show, respectively, a front view and a side view of user's interface integrated into data multi intercommunication system for information storage cards, as the object of present invention.
Figures 3a and 3b show, respectively, the housing means for information and data storing plates as well as means for their connection with user's interface circuitry, and an inside view of said user's interface once the corresponding plates have been positioned.
Figure 4 shows, schematically, a block diagram of a optional arrangement of data multi intercommunication system for information storing cards, as the object of present invention incorporating connection means to establish communication with an external device.
Figure 5 shows a front view of user's interface as part of system arrangement shown in figure 4.
Figure 6 shows, schematically, a block diagram of an optional arrangement of data multi intercommunication system for information storage cards, as the object of present invention.
Figure 7 shows a front view of user's interface as a part of practical performance of data multi intercommunication system for information storage cards as shown in figure 6.
Figure 8 shows an information and data external support in which a microchip is housed, in a form of tag, which is to be fixed on a commercial product whose authenticity we want to check, and which contains some predeterminated data.

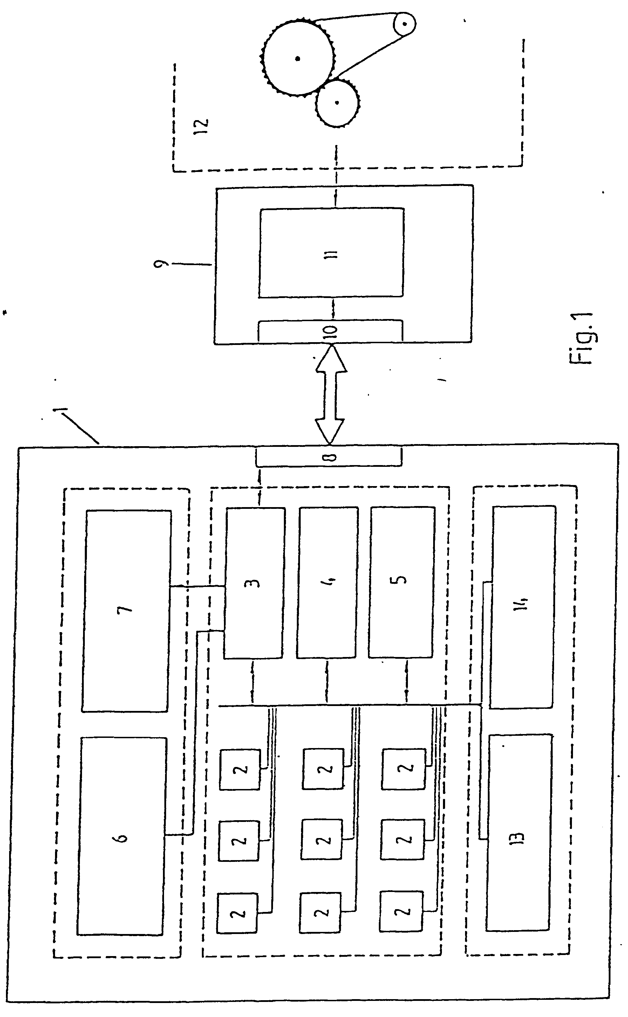

As it is shown on figure 1, the data multi intercommunication system for information storage cards such as credit cards and similar, consists of
- an user's interface (1), which basically consists of a remote control device provided with space for housing one or several plates (2) that contain cards data and information, a printed circuit prepared to be connected to said plates, which in the figure is shown as a set of electrical connections, designed to read information born by said plates, a microprocessor (3) designed for control, command and recording of operations made at said user's interface (1), information storage means (4,5) such as, preferably, a first writing and reading memory (4) designed for data recording and reading and a second reading memory (5), preferably an EPROM memory, an alphanumeric keyboard (6) prepared to get access to information and to send instructions to sais plates (2), a monitoring screen (7) designed to display all information reed to operations performed, and a transmitter-receiver device (8), preferably of infrared type, designed to establish communications with external devices which process those operations.
- an external device (9) to process operations ordered from said user's interface (1), provided with a transmitter-receiver device (10) prepared to establish communication with user's interface (1), and with a connection module (11) designed to command electromechanical and/or electronic devices (12) to implement operations ordered from said user's interface (1).

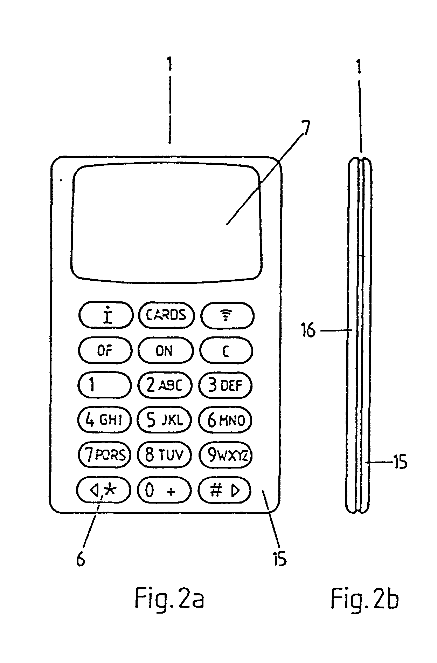

In particular and as it is shown on figures 2a and 2b, user's interface (1) is provided with a case made (15) of a resistant ad preferably light material, like plastic or any similar material, of an adequate size to be carried in a pocket, wallet or similar, with preferred size of said user's interface (1) close to real dimensions shown in figures 2a and 2b. Also, it will be provided with opening means to house one or several plates storing data and information of cards such as credit cards and similar, preferably made of a folding cover (16) located at the back, with fastening means arranged in a way that when closed, plates will be safely, and preferably pressure, fastened (2). In this way the location, distribution and removal or replacement of said plates (2) can be done easily by user, so he will have access to the set of information and data storing plates (2) by simply opening the case.

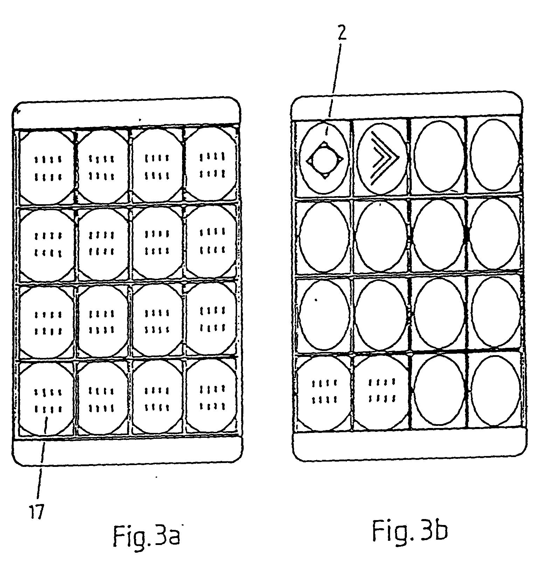

Figure 3a shows those housing means for information and data storing plates (2) which basically consist of a set of compartments (17) provided with a connector for electrical connection to the printed circuit mentioned hereinbefore, designed to be connected to said plates (2) with the purpose of reading the information born on said plates (2). There are 16 compartments, prepared to hold same number of plates, in present practical example. However, it is clear that user's interface can be configurated with a different number of compartments. Connection, reading of information and communication with the set of information and data storing plates (2) are made from a microprocessor (3) located in user's interface (1) through said printed circuit. This microprocessor (3) also processes control, command and recording operations as performed from said user's interface (1).

Figure 3b shows user's interface (1) with corresponding plates (2) housed in compartments (17) shown in figure 3a.

The microprocessor (3) located in user's interface (1) can, as an option, automatically recognise each one of the information and data storing plates (2) placed in their housing, and also identity each plate (2) position through an exploratory check.

Microprocessor (3) operations are complemented with a first reading and writing memory (4) prepared to record and read data, and a second reading memory (5), preferably an EPROM memory located in user's interface (1). This reading memory stores (5) each of the communication procedures which correspond to each one of the information and data storing plates (2) located within user's interface. Furthermore, said memory (5) can hold several procedures intended to communicate with other plates not yet placed in user's interface (1) either because user has not got the corresponding plate (2) or because he has not considered use of such services, etc., but with possibility of future use and of standard non custom manufacture.

The set of electronic elements located in user's interface of data multi intercommunication system for information storage cards are fed by a power system, not shown in the figures, which basically consist of a set of rechargeable batteries. Also, a internal safety power system can be provided, to avoid data loss and user's interface (1) deconfiguration, etc., due to discharge of main batteries.

User's interface is also provided with means to commnunicate with user, which preferably consist of an input device, mainly an alphanumeric keyboard (6) arranged to allow access to information and to have plates control, and an output device, mainly a monitor screen (7) prepared to show the information related to operations performed. Figure 2a shows an example of how the keyboard is arranged with poweron and power off keys, information key, card selection key, cancellation key, emission key and alphanumeric keyboard for use of user's interface (1). Based on this, user adresses and controls the required operations by means of the data multi intercommunication system for information storing cards such as credit cards and similar, as the object of present invention, by using the alphanumeric keyboard (6) thus allowing for the selection of a given service by selecting the corresponding plate (2), the access control to said service by lingering the personal key or corresponding code number, and other check or control operations like data on credit accounts, electronic purse or similar arrangements, as well as the access to databases with different contents (telephone lists, electronic diary, etc.). Also, the monitor screen(7), which can, for example, be of multiline liquid crystal type, can provide information about balance and results of operations already made or to be made, as well as the required information or, in general, that information related to operations processed through by using the keyboard. Furthermore, the process and results of operations performed o to be performed, like the required information, or in general, the information related to the operations made through thealphanumeric keyboard can be visualized on the display monitor (7), which can, for example, consists of a multiline liquid crystal.

In this way, those permanent storage means (4) of user's interface are provided with directional storage space for holding a personal data base, which is prepared to store data related to own system, to user or any other data to be incorporated into said data base.

Also, said user's interface includes protection means which basically consist of permanent storage means, such as, mainly, an EPROM memory (5), for recording and storage of personal access keys intended to restrict the use of user's interface at different levels, such as, mainly, global access, restricted access or operation restricted to user. Thus, a series of safety measures are implemented in order to let user carry out required operations that apply restrictions for said interface use at different levels, thus avoiding any unauthorized use by a third person, due to loss or theft of user's interface (1). Within this series of safety and restriction measures, user can be provided, as an option, with an individual and exclusive interface (1) identification number, so that interface must have means for the storage of said individual and exclusive identification number or key.

Also, the data multi intercommunication system for information storing cards such as credit cards or similar, is provided with an external device (9) for the control of operations adressed from said user's interface (1), with the purpose of, first establish a bidirectional communication with said user's interface (1), and, second, to activate the electromechanical and/or electronic elements (12) of the device that provides the required service, like a cash dispenser, telephone bill payment, public service ticketing machine or similar, which now incorporate a proper card controller.

With the inttention of allowing for the establishment of a bidirectional communication between user's interface (1) and said external device (9) for the control of operations adressed from said user's interface (1), both elements from the data multi inter-communication system for information storage cards such as credit cards or similar, as the object of present invention, are provided with a transmitter-receiver device (8,10).

The transmitter-receiver devices (8,10) located in user's interface (1) as well as in said external device (9) for the control of operations adresses from said user's interface (1), are, mainly, transmitter-recievers of infrared type, without excluding any other signal like radio frequency, ultrasounds, etc.

Finally, the data multi intercommunication system for information storing cards such as credit cards or similar, as the object of present invention, is provided with a set of elements designed to communicate with other external devices. In this way, the same transmitter-receiver device (8) located in user's interface (1) generates the communication of interface with a serie of preset information devices or stations which are equipped in a way to be able to communicate with same user's interface (1).

Also, the data intercommunication system for information storage cards such as credit cards or similar, as the object of present invention, has been adapted for remote communication with external devices. In that respect, user's interface (1) is provided with a modem connection interface (13) which allows for remote connection and communication between said user's interface (1) and a computer (not shown in the figures), thus allowing for a bidirectional data exchange between both devices, and letting user control and supervise the series of operations performed or their integration into a data base, the control of user's interface from computer as well as configuration, check and similar operations on own user's interface by working with the required tools incorporated into computer. In this way, the same user's interface lets transfer data from interface to computer, where he will be able, with the analysis and control tools for data bases available in the market, to easily and quickly analyse the whole of operations performed.

The connection means to modem (13) an to computers, as described hereinbefore, also allow for the use of the data multi intercommunication system for information storage cards such as credit cards or similar, as the object of present invention, the performance of purchase operations, access to data bases, etc., through a computer and global or local networks such as Internet. The access to this type of local or global networks will let user have access to their available information like the use of services offered, and using his own user's interface (1) as way of payment.

User's interface (1) of data multi intercommunication system for information storage cards such as credit cards and similar, as shown in the practical performance described hereinbefore, is provided with an interface for connection to an external reader (14), which is designed to allow for a bidirectional mutual communication, as well as to have access from said reader to the information and data born on those plates and in the internal storage means of own user's interface. Checking, monitoring and configuration operations of own user's interface can be made from said external reader.

The mentioned connection interface (14) may physically be the same modem connection interface (13) as described hereinbefore, but for present practical arrangement it is shown as consisting of two physically independent elements. In any case, its use will require in each case the required controller.

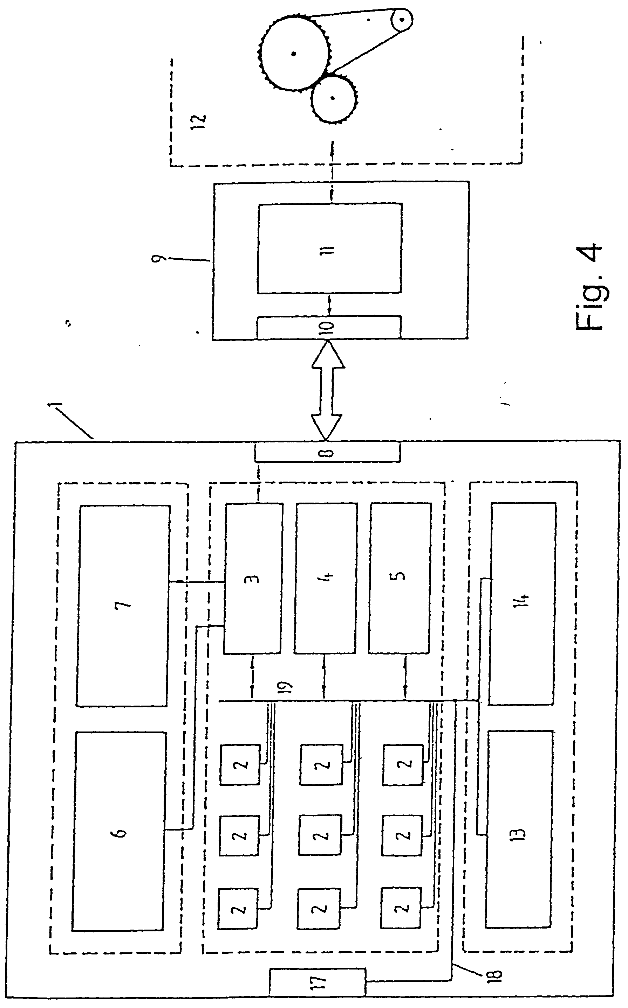

If now we refer to figures 4 to 7, figure 4 shows an optional arrangement of data multi intercommunication system for information storing cards such as credit cards or similar, which comprises:
- an user's interface (1) mainly consisting of a remote control having space for holding one or several plates (2) with information and data from said cards, a printed circuit designed to be connected to said plates, as shown in the figure as the electrical connections assembly, with the purpose of reading all information born in said plates, a microprocessor (3) designed to control, command and recording of operations adressed from said user's interface (1), means for information storage (4,5) such as, preferably, a first reading and writing memory (4) prepared to record and read data, and a second reading memory (5), mainly an EPROM memory, an alphanumeric keyboard (6) to allow for access to information and control of said plates (2), a monitoring screen (7) that will show all information related to operations performed, ad a transmitter-receiver device (8) designed to establish communication with the external devices that control said operations.
- an external device (9) for the control of operations adressed from said user's interface (1), provided with a transmitter-receiver device (10) designed to establish communication with user's interface (1), and a driving module (11) designed to command the electromechanical and/or electronic devices (12) to perform the operations adressed from said user's interface(1).
- connection means (17) for an electronic chip or a external information and data storing plate, designed to read the information born on said external plate through said user's interface (1), which includes a printed circuit prepared to connect with said plates and shown in the figure by its electrical connection (18) with main bus (19), and with possibility to communicate with the rest of user's interface components (1).

The data multi intercommunication system for information storage cards such as credit cards or similar is designed for remote communications with external devices. In this respect, user's interface (1) is provided with a modem connection interface (13) which is prepared to establish a remote connection and communication between said user's interface (1) and a computer (not shown in the figures), thus allowing for a data bidirectional exchange between both devices.

The user's interface (1) of the data intercommunication system for information storage cards such as credit cards or similar is provided with an interface for connection to a external reader (14), which is adequate to allow for a bidirectional communication with each other, as well for an access from said external reader to the information contained in said plates provided with information and data and to said storage means within user's interface. From said external reader the user can perform checking, verification and/or configuration operations of own user's interface.

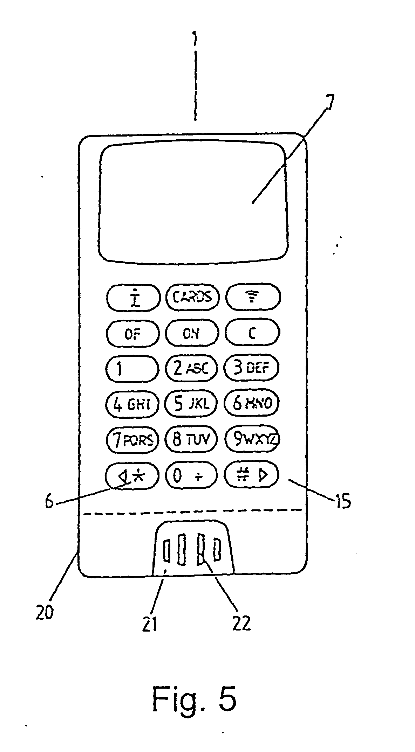

As it is shown in figure 5, user's interface (1) is provided with a case (15) made of a resistant material, preferably of light weight, like plastic or any other similar material of a adequate size to be carried inside a pocket, wallet or similar, with preferred user's interface (1) size close to real size shown in figure 5. The case lower extension (15) is provided with connection means (17) which in present practical arrangement consists of a slot (20) having an opening (21) through case top side (15) designed to be connected to an external electronic chip by means of interior electrical contacts (22).

Optionally, such opening can be provided with removable protection means (not shown on figures) such as a small flange or similar, which is aimed to adequately protect the electrical contacts (22) located in the opening (21) from dirt and other external agents.

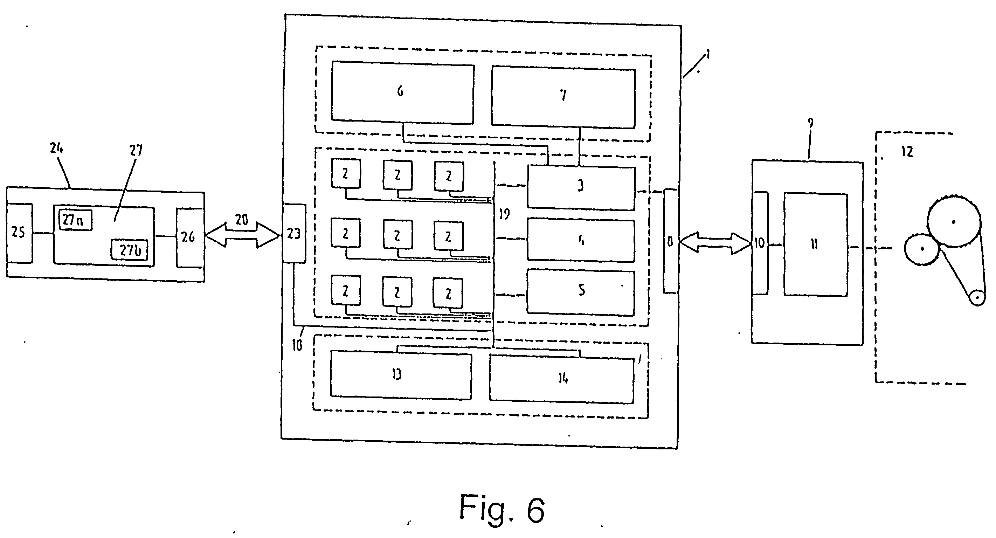

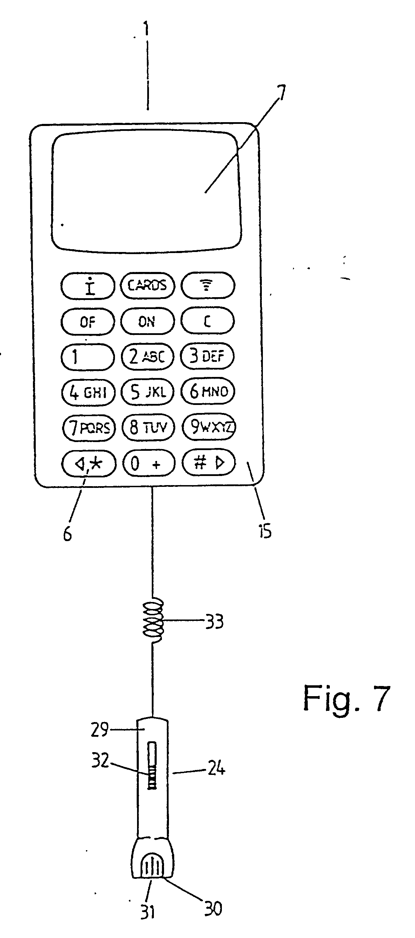

Figures 6 and 7 show another example of an arrangement of the data multi inter-communication system for information storage cards such as credit cards and similar, as the object of present invention.

As it is shown on figure 6, the connection means consist of a communications port (23) prepared for connection to an external reading device (24), the said communications port (23) being provided with means for connection to said printed circuit which is incorporated into said user's interface, shown on figure 6 as the electrical connection (18) with main bus (19), designed to be internally connected with the remaining user's interface (1) components.

Such an external reading device (24) mainly consists of the information and data storage plate reading device mounted on a support element like a label or similar, and provided with means for connection (25) to a external electronic chip through properly arranged electrical terminals. Also, it is provided with control, command and synchronization means of communication with user's interface (1) by using the communications means corresponding procedure (26) with said user's interface (1), as well as with the electronic circuits (27) required to convert the information obtained from the external electronic chip by the external reading device (24) into a signal (28) that will be sent to user's interface (1) communications port (23) by using mentioned corresponding communication means (26).

Optionally, the reading device (24) electronic circuits (27) can be additionally be provided with own temporary storage system (27a) as well as with data evaluation means (27b).

As it is shown on figure 7, in present practical arrangement, the external reading device (24) consists of a device inside a case (29) with a round or flat elongated shape, having at one end a connection means (25) which in present practical arrangement consists of a opening (30) preferably open on its center plane and designed to be connected to an external electronic chip through electrical terminals (31) so arranged. Furthermore, the external reading device (24) is provided with reading activation/deactivation means (32). Finally, said external reading device (24) is provided with means for communication (26) with said user's interface (1), which in present practical arrangement consist of a electrical cable (33) with the other end connected to user's interface (1) communications port (23). The connection of electrical cable (33) to user's interface (1) is made by means of a proper connector, preferably not permanently fixed to user's interface.

Usually, communication between user's interface (1) and external reading device (24) can be done by means of any conventional transmission system like cable transmission, radio transmission or optical transmission. Therefore, the external reading device (24) electronic circuits (27) as well as the user's interface (1) communications port (23) are provided with signal conversion means and with required transmission-reception means.

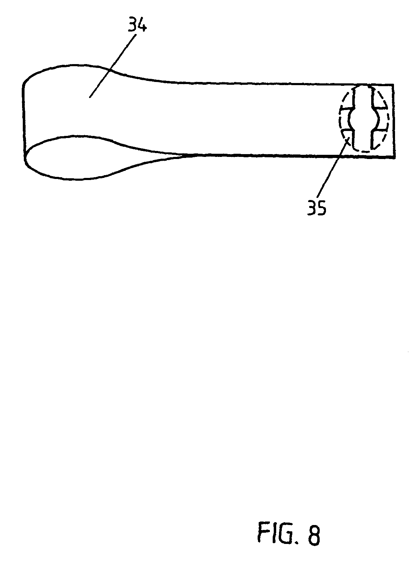

Now, referring to figure 8, we have to emphasize that, advantageously, sauid external information and data support (34) can include a microchip (35) of the type used in the intelligent cards. Said microchip must comply with all ISO 7816 specifications, except for the size of the physical support, i.e, it will be mounted on a different support (36) from a credit card, such as a rigid fabric label or any other rigid element that cap be used as a label.

The microchip (35) consists of a silicon microprocessor with asyinchronous communication, so that it will be an unique and non duplicable element, thus preventing any duplicating of said microchip. The operation system or chip face contains a coding system called DES that permits that the communication with the reading device of said system be completely safe and preventing any fraud related to the label (chip) and to the reading device.

Once the nature of present invention, together with one method to execute it, have been described sufficiently, it needs only to be added that it will be possible to make modifications in shape, materials and arrangements on the whole of it or its components, as long as those modifications do not essentially alter the invention features claimed as follows:

## Claims

1. Data multi intercommunication system of information storage cards such as credit cards or similar cards, of the type used in banking operations, purchase operations, identification ad other services, as well as other home type operations, featured for comprising:
- an user's interface (1) which is basically a remote control provided with means for housing one or several plates (2) that contain information ad data from said cards, a printed circuit adequate to establish contacts with said plates, a microprocessor (3) designed to control, command and record operations carried out from that user's interface (1), information storage means (4,5) such as, preferably, a first reading and writing memory (4), for data recording and reading, and a second reading memory (5), preferably a EPROM memory, and alphanumeric keyboard (6) which makes it possible the access to information and handling of said plates (2), a visual screen (7) adequate for the display of information related to operations made, and a transmission-reception device (8), preferably with infrared rays, adequate to establish communication with exterior devices handling said operations.
- an external device (9) for handling operations commanded from said user's interface (1), which includes a transmission-reception (10) device designed to establish communication with user's interface (1), and a driving module (11) designed to command the electromechanical and/or electronic devices (12) used to implement operations controlled from said user's interface (1), and as an option,
- connection means for an electronic chip or a external information and data storing plate, designed to read the information born on said external plate through said user's interface (1), which includes contact means (22,31) like a printed circuit prepared to connect with said plates with its electrical connection (18) with main bus (19), and with possibility to communicate with the rest of user's interface (1) elements.

2. Data multi intercommunication system of information storage cards such as credit cards or similar, in accordance with previous claim, featured for the transmission-reception device (10) is an infrared type transmitter-receptor.

3. Data multi intercommunication system of information storage cards such as credit cards or similar, in accordance with previous claims, featured for said microprocessor (3) and memories (4,5) contained in said user's interface (1) are intended to perform control, classification, identification and storage functions of information related to operations performed in accordance with criteria established in the microprocessor (3) programs.

4. Data multi intercommunication system of information storage cards such as credit cards and similar, in accordance with previous claims, featured for the user's interface (1) comprises protection means which mainly consist of permanent storage means (5), such as, mainly, an EPROM memory, to record and store the personal access keys in order to restrict the user's interface use to different levels, such as, mainly, global access, restricted access or operation restricted to user.

5. Data multi intercommunication system of information storage cards such as credit cards or similar, in accordance with the previous claims, featured for that user's interface (1) includes means for the storage of an individual and exclusive identification number of said user's interface.

6. Data multi intercommunication system of informatioon storage cards such as credit cards or similar, in accordance with previous claims, featured for that user's interface is provided with means for configuration and reconfiguration of said user's interface, as well as for adaptation, substitution, replacement and elimination of said information and data storage plates (2).

7. Data multi intercommnunication systeme of information storage cards such as credit cards or similar, in accordance with previous claims, featured for it is adapted to remote communication with external devices.

8. Data multi intercommunication system of information storage cards such as credit cards or similar, in accordance with previous claims, featured for that user's interface (1) is provided with connection interface to a modem (13), designed to make it possible a remote connection and communicationn between said user's interface (1) and a computer, allowing for a bidirectional exchange of data between both devices.

9. Data multi intercommnunications system for information storage cards such as credit cards or similar, in accordance with previous claims, featured for the user's interface (1) is provided with a connection interface to a external reader (14), designed to allow for a mutual bidirectional communication, as well as for access from said reader to information ad data stored by said plates (2) and to user's interface own internal storage means (4,5) of the own user's interface (1).

10. Data multi intercommunication system of information storage cards such as creditr cards or similar, in acordance with previous claims, featured for it is adapted to get general information, bank information or similar, related to account operations, balances and any oher operation, as well as any othe information available in data bases of operation centres, as well as carrying out payments, reception of amounts with any of available systems for the performance of said operations.

11. Data multi intercommunication system of information storage cards such as credit cards or similar, in accordance with previous claims, featured for that user's interface (1) is prepared to perform purchase operations, access to data bases, etc, through a computer and local or global computer networks, such as, mainly, Internet.

12. Data multi intercommunication system of information storage cards such as credit cards or similar, in accordance with previous claims, featured for that user's interface (1) is adapted to perform telephone payment operations through available telephone systems.

13. Data multi intercommunication system of information storage cards such as credit cards or similar, in accordance with previous claims, featured for that permanent storage means (4,5) of user's interface (1) are provided of directional storage space for holding a personal data base, prepared to store data related to own system, to user or any other type of data that need to be stored in said data base.

14. Data multi inytercommunication system of information storage cards such as credit cards or similar, in accordance with previous claims, featured for that it comprises means for the detection of errors, alarms or similar, prepared to detect irregular conditions due to wrong, unadequate or non authorized use, as well as blocking means of one, several or all operations that can be controlled from said user's interface (1) as a result of the activation of said error, alarm or similar detection means.

15. Data multi intercommunication system of information storage cards such as creditr cards or similar, in accordance with previous claims, featured for that user's interface (1) incorporates its electronic elements in one configurable printed circuit designed to incorporate in said circuit the performance of said information ad data storage plates.

16. Data multi intercommunication system of information storage cards such as credit cards or similar, in accordance with first claim, featured for those connection means (17) are incorporated within case frame (15) of user's interface (1), consisting of a slot (20) having an opening (21) through case top side designed to be connected to a external electronic chip by means of electrical contacts (22) installed inside.

17. Data multi intercommunication system of information storage cards such as credit cards or similar, in accordance with claim 16, featured for that said slot (21) is provided with releasable protection means like a flange or similar, designed to protect the electrical contacts (22) from dirt and other external agents.

18. Data multi intercommunication system of information storage cards such as credit cards or similar, in accordance with claim 16, featured for that said connection means consisting of a communication port (23) prepared for connection to a external reader (24) prepared to be connected to an external information and data storage plate supported by an external item like a label or similar, and said external reading device (24) being provided with connection means (25) adequate to connect to said electronic chip or external plate,. By means of electrical contacts (31), as well as with means for control, command ad synchronization of communications with user's interface (1) by using the communications means corresponding procedure (26) with said user's interface (1), as well as with the electronic circuits (27) designed to translate the information read from external electronic chip by means the external reading device (24) into a signal (28) to be transmitted to the communications port (23) of user's interface (1) by means of said corresponding communication means (26)

19. Data multi intercommunication system of information storage cards such as credit cards or similar, in accordance with claim 18, featured for that electronic circuits (27) of reading devive (24) can be additionally provided with temporary storage means (27a) as well as with data validation means (27b).

20. Data multi intercommunication system of information storage cards such as credit cards or similar, in accordance with claims 18 and 19, featutred for that said external reading device (24) consists of a device housed in a case (29) with an elongated and mainly round or flat shape, provided in its end with connection means (25) consisting of a slot (30) mainly open by its center plane, designed to be connected to an external electronic chip by means of said electrical contacts (31), being also provided with reading activation/release means (32).

21. Data multi intercommunication system of information storage cards such as credit cards or similar, in accordance with precedent claims characterized in that the external information and data support can be mounted on a physical element such as a vehicle, valuable object, baggage or similar with the purpose of control and localization of said physical element, the transmission of information and data between the reading device and the external physical support being performed through the global positioning system (GPS) or similar system.

22. Data multi intercommunication system of information storage cards such as credit cards or similar, in accordance with precedent claims characterized in that the external information and data support can be mounted on a commercial label or seal with the purpose of having a control and checking the authenticity of trademarks and manufacturing features of commercial products, the transmission of information between the chip included within said external information physical support and said reading device being established by means of physical contact or without any physical contact.
